(19) Europäisches Patentamt
European Patent Office
Office européen des brevets

(11) **EP 3 873 721 B1**

(12) **EUROPEAN PATENT SPECIFICATION**

(45) Date of publication and mention of the grant of the patent:
**02.08.2023 Bulletin 2023/31**

(21) Application number: **19926935.8**

(22) Date of filing: **30.04.2019**

(51) International Patent Classification (IPC):
*B29C 64/343* (2017.01)  *B29C 64/153* (2017.01)
*B29C 64/218* (2017.01)  *B29C 64/321* (2017.01)
*B29C 64/205* (2017.01)  *B29C 64/20* (2017.01)
*B29C 64/393* (2017.01)  *B33Y 10/00* (2015.01)
*B22F 12/90* (2021.01)  *B22F 12/60* (2021.01)
*B22F 12/57* (2021.01)  *B22F 10/28* (2021.01)
*B33Y 40/00* (2020.01)  *B33Y 30/00* (2015.01)
*B33Y 50/02* (2015.01)  *B22F 10/37* (2021.01)

(52) Cooperative Patent Classification (CPC):
(C-Sets available)
**B29C 64/153; B22F 10/37; B22F 12/90;
B29C 64/205; B29C 64/218; B29C 64/321;
B29C 64/343; B29C 64/393; B33Y 10/00;
B33Y 30/00; B33Y 40/00; B33Y 50/02;** B22F 10/28;
B22F 12/63; B22F 2999/00;            (Cont.)

(86) International application number:
**PCT/US2019/029878**

(87) International publication number:
**WO 2020/222796 (05.11.2020 Gazette 2020/45)**

(54) **BUILD MATERIAL SPREADING APPARATUSES FOR ADDITIVE MANUFACTURING**

BAUSTOFFVERTEILUNGSVORRICHTUNGEN ZUR GENERATIVEN FERTIGUNG

APPAREILS D'ÉTALEMENT DE MATÉRIAU DE CONSTRUCTION POUR FABRICATION ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **Hewlett-Packard Development
Company, L.P.
Spring TX 77389 (US)**

(72) Inventors:
• **JUAN JOVER, Fernando**
**08174 Sant Cugat del Valles (ES)**
• **MOSQUERA DONATE, Gerard**
**08174 Sant Cugat del Valles (ES)**
• **ROIG GRAU, Berta**
**08174 nt Cugat del Vallés (ES)**
• **MELIA SUNE, Francesc**
**08174 nt Cugat del Vallés (ES)**

(74) Representative: **Bennett, Adrian Robert J. et al
AA Thornton IP LLP
Octagon Point
5 Cheapside
London EC2V 6AA (GB)**

(56) References cited:
WO-A1-2017/127114    WO-A1-2018/186837
JP-A- 2008 068 439    JP-A- 2015 150 804
US-A1- 2001 045 678    US-A1- 2004 265 413

(52)  Cooperative Patent Classification (CPC): (Cont.)
Y02P 10/25

C-Sets
B22F 2999/00, B22F 12/90, B22F 12/57,
B22F 10/37

**Description**

**BACKGROUND**

Additive manufacturing devices, sometimes called 3D printers, produce print parts by adding successive layers of material from a series of cross sections which are joined together to create the final part. In some additive manufacturing machines, a build material spreading apparatus forms layers all along a build area. Heat may be used to selectively fuse together the particles in each of the successive layers to form the cross sections of the final part. Manufacturing may proceed layer by layer until the object is complete.

JP 2015150804A describes a three-dimensional modeling apparatus including a measuring unit to measure an amount of excess powder and a calculating unit to determine an amount of powder to be newly supplied.

US 2004/265413 A1 describes an apparatus for fabricating a three-dimensional object, the apparatus including an overflow sensor to monitor excess material. In response to a signal indicative of the excess material, the apparatus is to adjust the amount of material dispensed by a build material dispenser assembly.

JP 2008068439A describes a powder sintering additive manufacturing apparatus including control means to adjust at least one of a descending amount of a bottom plate of a powder material container on the side to carry the powder material based on a remaining amount of powder material.

**BRIEF DESCRIPTION OF THE DRAWINGS**

Various examples will be described below by referring to the following figures, in which:

Figure 1 is a schematic view of an additive manufacturing device according to an example of the present disclosure.
Figure 2 is a sideview of a build material spreading apparatus of the example additive manufacturing device from figure 1.
Figure 3 is an isometric view of a build material spreading apparatus according to another example of the present disclosure.
Figure 4 is a sideview of the example build material spreading apparatus of figure 3.
Figure 5 is a cross-sectional view taken along the line V-V in figure 4.
Figure 6 is a flowchart of an example build material spreading method of the present disclosure.
Figure 7 illustrates an example of the image taken by the camera of the example build material spreading apparatus of figures 3 to 5.
Figure 8 illustrates an example construction implemented to the example image of figure 7.
Figure 9 illustrates another example construction implemented to the example image of figure 7.

**DETAILED DESCRIPTION**

In one example, a build material dispenser is to provide build material to spread so as to form a layer. In order to ensure that each layer of build material is formed correctly, more material than needed is generally provided to be spread to form each layer, the material remaining after formation of the layer being generally directed into an overflow chamber.

In one example, a controller calibrates the amount of build material needed to form a subsequent layer taking into account an excess amount of build material dispensed to form a layer already spread over the build area. This may decrease overflows of build material, in such a way that the additive manufacturing machines may become able to do larger jobs with the same supply chamber size and smaller overflow chambers.

In accordance with the claims, a camera allows taking a picture of the layer on the build area. Analysis of the picture taken by the camera allows translating it into an amount of material needed for a subsequent layer.

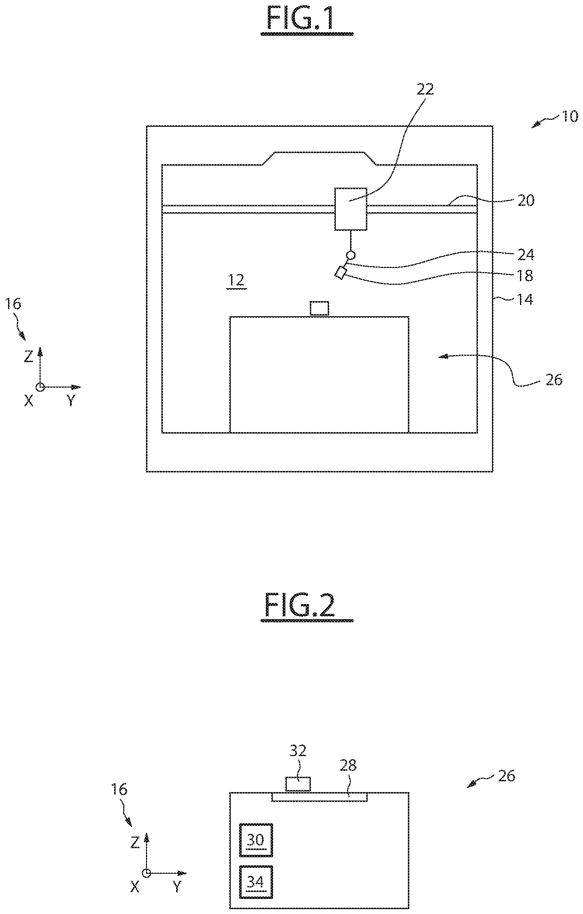

In one example, which is depicted on figure 1, an additive manufacturing device 10 includes a printing chamber 12 delimited by a printing structure 14.

In this example, a direct orthonormal vector basis 16 is attached to the printing structure 14. The vector basis 16 may include a vector X, a vector Y and a vector Z. When the printing structure 14 is arranged on a plane horizontal surface, the vector Z is vertically, upwards oriented.

The additive manufacturing device 10 may include a heat source 18 located within the printing chamber 12. In this example, the heat source 18 is able to move with respect to the printing structure 14 along several, e.g. three, translation degrees of freedom and several, e.g. three, rotation degrees of freedom. To do so, the additive manufacturing device 10 may include a rod 20 extending along the direction of the vector Y, a box 22 movable with respect to the rod 20 in translation along the direction of the vector Y, an arm 24 holding the heat source 18 and movable with respect to the box 22 in rotation in the plane perpendicular to the vector X.

The additive manufacturing device 10 includes a build material spreading apparatus 26. Figure 2 is a sideview of the build material spreading apparatus 26.

Referring to figure 2, the build material spreading apparatus 26 includes a build area 28, a build material dispenser 30, a movable spreader 32 and a controller 34. In this example, the build material dispenser 30 may contain a large amount of build material. The movable spreader 32 may move in translation above the build area 28 along the direction of the vectors X and Y. In this example, the build material may be powdered material.

By virtue of this arrangement, prior to the formation of a layer on the build area 28, the build material dispenser 30 provides the movable spreader 32 with a predetermined volume of build material. The movable spreader 32 may move in translation above the build area 28 so as to form a first layer on the build area 28. Then, the controller 34 determines an excess amount of build material dispensed to form the first layer, that is, an amount of build material remaining after the spreading operation. The controller 34 calculates an amount of build material needed to form a second layer taking into account the excess amount of build material dispensed to form the first layer, and pilots the build material dispenser 30 to provide the movable spreader 32 with a modified amount of build material. Hence, the controller 34 calibrates the predetermined amount of build material needed to form the second layer.

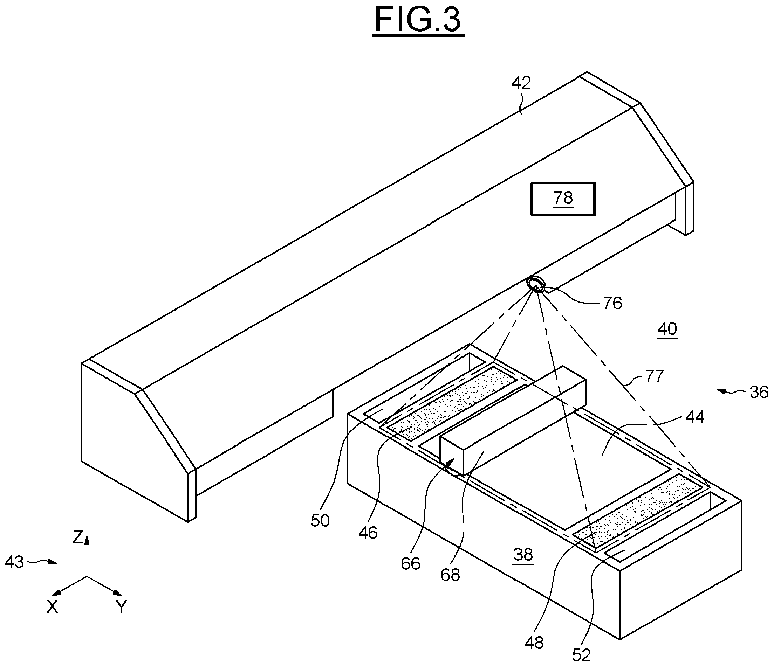

In another example, which is depicted on figures 3 to 5, a build material spreading apparatus 36 includes a housing 38 enclosed within a printing chamber 40. The printing chamber 40 may be partially delimited by an elongated wall 42. In another example, the build chamber may be separate from the build material spreading apparatus.

In the example of figures 3 to 5, a direct orthonormal vector basis 43 is attached to the elongated wall 42. The vector basis 43 may include a vector X, a vector Y and a vector Z. When the elongated wall 42 is arranged parallel to the vector X, the vector Z is vertically, upwards oriented.

Unless indicated otherwise, the words "upwards", "downwards", "upper" and "lower" shall be understood as referring to the direction of the vertical, upwards oriented vector Z and the word "horizontal" means perpendicular to the vector Z.

The housing 38 may include a platform chamber 44, a first supply chamber 46, a second supply chamber 48, a first overflow chamber 50 and a second overflow chamber 52. In this example, the platform chamber 44 is located between the chambers 46 and 48, the first supply chamber 46 is located between the chambers 50 and 44, and the second supply chamber 48 is located between the chambers 44 and 52.

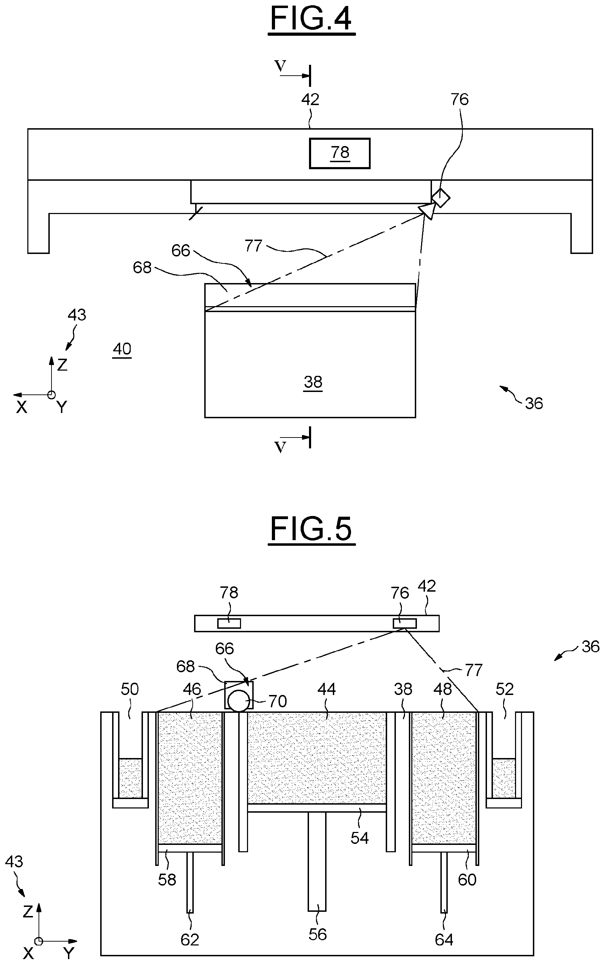

In the example of figures 3 to 5, the platform chamber 44 is downwards delimited by a platform 54 (see figure 5). The platform 54 may move in translation along the direction of the vector Z with respect to the housing 38, for instance by means of a jack 56. The first and second supply chambers 46 and 48 may be downwards delimited by respective pistons 58 and 60 which may move in translation along the direction of the vector Z. The pistons 58 and 60 may be actuated by means of respective jacks 62 and 64.

The build material spreading apparatus 36 includes a spreader 66. The spreader 66 can include a casing 68 and a roller 70 accommodated within the casing 68. The roller 70 may be a cylinder rotatable about an axis parallel to the vector X. The spreader 66 may be movable with respect to the housing 38 in horizontal translation above the chambers 46, 44 and 48. The spreader 66 may be movable in translation about the direction of the vectors X and Y between the first and second overflow chambers 50 and 52. The roller 70 may be movable in rotation about its own axis with respect to the casing 68.

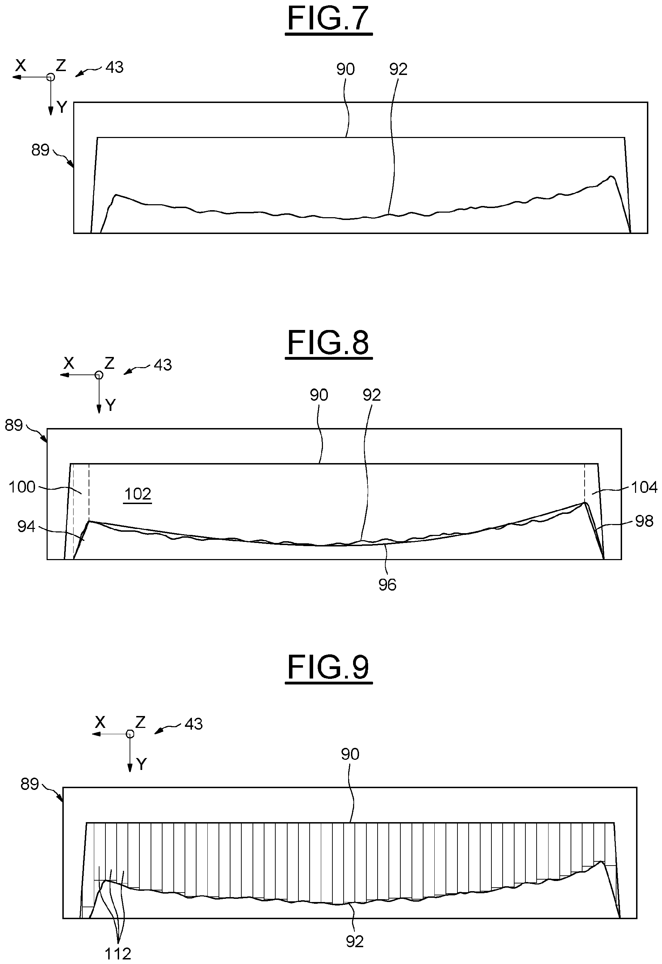

The build material spreading apparatus 36 includes a camera 76. The camera 76 may be attached to a printing structure of an additive manufacturing device, for instance to the wall 42. The camera 76 may be located in one corner of the printing chamber 40. Hence, there is no need of a lens and the risk of collision with other subsystems of the additive manufacturing device is decreased. The scope of the camera 76 is indicated on figures 3 to 5 with the dashed lines 77. In this example, the camera 76 has a field of vision encompassing the upper surface of the chambers 46, 44 on 48. Hence, the camera 76 may take pictures of layers spread over the upper surface of the chambers 46, 44 and 48. Figure 7, which will be described later, illustrates a portion of an example of such a picture.

The build material spreading apparatus 36 includes a controller 78. The controller 78 may be in data communication with the camera 76, with the jack 62 and with the jack 64.

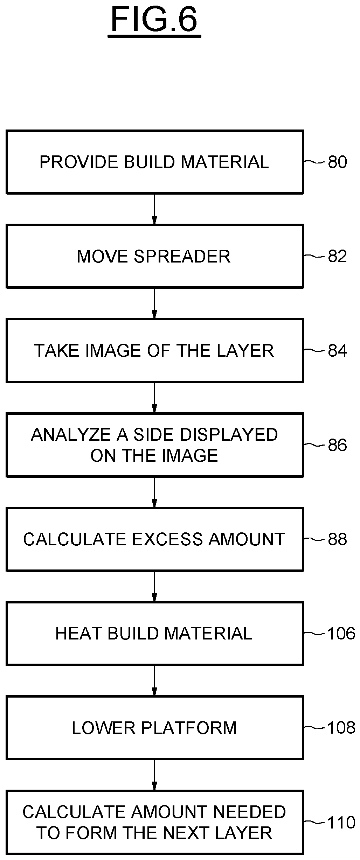

In one example, which is depicted on figure 6, a build material spreading method using the example build material spreading apparatus 36 of figures 3 to 5 will now be detailed. The example method of figure 6 may be implemented each time a layer is formed. During an initial state of the example method, the spreader 66 is located between the first overflow chamber 50 and the first supply chamber 46.

The example method may include, at block 80, controlling the jack 62 to move the piston 58 upwards. As a result, an amount, e.g. 12 grams, of build material is provided from the first supply chamber 46 to an area being between the spreader 66 and the platform chamber 44. The build material used in the example method of figure 6 may be any suitable type of build material, such as a plastic, a metal, a ceramic or the like. During the first step 80, the jack 64 may also move the piston 60 downwards. The displacement of the piston 60 along the direction of the vector Z may be of a height $h_{predetermined}$.

The example method may include, at block 82, controlling the spreader 66 to move into the second overflow chamber 52. By doing so, a layer is formed over the platform chamber 44 and the second supply chamber 48. Meanwhile, extra build material may be spread over the second supply chamber 48.

The example method includes, at block 84, taking an image of the layer formed at block 82. Extra build material spread at block 82 may form a portion 89 of the layer which is adjacent to the position of the spreader 66 at the end of the displacement of the spreader 66 at block 82. A portion 89 of an example image taken is depicted on figure 7.

The example method may include, at block 86, analyzing one side of the overflow powder as captured shown on the image taken at block 84. The side which is analyzed may be the side of the layer formed at block 82 which is adjacent to the spreader 66 in its position at the end of its displacement at block 82. In other words, when the spreader 66 moves from the chamber 50 to the chamber 52, the side which is analyzed may be the side of the layer formed at block 82 which is adjacent to the second overflow chamber 52.

The example method may include, at block 88, calculating an excess amount $a_{excess}$ of build material dispensed.

To calculate the amount $a_{excess}$, the example method uses a portion of the image taken at block 84. In one example, depicted on figure 7, the portion 89 of the image taken at block 84 shows a straight line 90 corresponding to an edge of the platform chamber 44. The portion 89 may also include a curved line 92 corresponding to the side of the layer formed at block 82.

According to an example of a geometrical construction, which is depicted on figure 8, the curved line 92 may be split up into a straight line 94, a parabolic line 96 and a straight line 98. The controller 78 may then divide the area between the lines 90 and 92 in a first area 100 delimited, along the direction of the vector Y, by the lines 90 and 94, a second area 102 delimited, along the direction of the vector Y, by the lines 90 and 96, and a third area 104 delimited, along the direction of the vector Y, by the lines 90 and 98. The controller 78 may then calculate the surface areas $A_{100}$, $A_{102}$ and $A_{104}$ corresponding respectively to the areas 100, 102 and 104. Then, the controller 78 may calculate the excess surface area $A_{excess}$ of build material as the sum of the surface areas $A_{100}$, $A_{102}$ and $A_{104}$.

In the example method, the controller 78 may calculate the excess volume $V_{excess}$ of build material as the product of the surface area $A_{excess}$ by a predetermined height, which could be the height $h_{predetermined}$.

In the example method, the controller 78 may calculate the excess amount $a_{excess}$ by multiplying the calculated volume $V_{excess}$ by the volumetric mass density $\rho$ of the build material.

Referring to figure 6, the example method may include, at block 106, heating the layer formed at block 82. The heat source 18 may be used to heat the layer. Particles may be fused together so as to form a cross section of the final part. If the build material used in the example method of figure 6 is a metal, heating the layer may not be implemented.

The example method may further include, at block 108, lowering the platform 54. To do so, the jack 56 may be actuated in such a way that it lowers the platform 54 of the height $h_{predetermined}$.

The example method may include, at block 110, calculating the amount $a_{next\_layer}$ of build material needed to form the next layer. To do so, the controller 78 may calculate the amount $a_{next\_layer}$ by subtracting the excess amount $a_{excess}$ from a predetermined constant amount A. For example, the amount A may be within a range 9 grams to 15 grams.

In the example method of figure 6, the steps 80, 82, 84, 86, 88, 106, 108 and 110 may then be repeated in order to form the next layer. For instance, the step 80 may be implemented using the second supply chamber 48 and the step 82 may be implemented by moving the spreader 66 into the first overflow chamber 50. In the example method of figure 6, controlling the jack 62 to move the piston 58 upwards is implemented in such a way that the amount of build material provided to the spreader 66 equals the amount $a_{next\_layer}$ determined just previously at block 110.

In another example of a geometrical construction of the portion 89, which is shown on figure 9, the area located between the lines 90 and 92 is divided into a plurality of rectangular areas 112. Each rectangular area 112 may have a side indistinguishable from the line 90 and a side located between the lines 90 and 92 and having one point in common with the line 92. In the example construction of figure 9, the dimension $e_{112}$ of the rectangular areas 112 along the direction of the vector X is the same for all the rectangular areas 112.

With the geometrical construction of figure 9, a step of calculating the excess amount $a_{excess}$ may include calculating the surface area of each rectangular area 112. To do so, for each rectangular area 112, the vertical length $l_{112}$ may be measured by the camera 76 and multiplied by the dimension $e_{112}$. The surface area $A_{excess}$ may then be calculated as the sum of the surface areas of all the rectangular areas 112. Then, the excess amount $a_{excess}$ may be obtained by calculating the excess volume $V_{excess}$ in the same way as in the example method of figure 6 and the example geometrical construction of figure 8.

In the geometrical construction of figure 9, the value of the dimension $e_{112}$ may be modified in order to adjust the accuracy of the determination of the surface area $A_{excess}$. Namely, the dimension $e_{112}$ may be decreased in order to determine more accurately the dimension $e_{112}$.

**Claims**

1. A build material spreading apparatus (26, 36) for additive manufacturing, including

   a movable spreader (32, 66) to spread build material over a build area (28),
   a build material dispenser (30) to provide the movable spreader with build material,
   a camera (76) to visualize at least partially the layer of build material provided by the build material dispenser, and
   a controller (34, 78) configured to calibrate the amount of build material needed to form a layer to be spread over the build area, wherein the controller is configured to:

control the build material dispenser to dispense a predetermined amount of build material;

control the movable spreader to spread the dispensed build material to form a layer of build material on the build area;

use an image taken by the camera to determine an amount of build material remaining after spreading; and

modify, based on the determined amount of remaining build material, the predetermined amount of build material to be subsequently provided by the build material dispenser.

2. The build material spreading apparatus of claim 1, wherein the controller is configured to:

use the image taken by the camera to measure a surface area of a portion of the layer;

calculate a volume by multiplying the surface area determined by a predetermined height;

infer the amount of remaining build material from the volume calculated.

3. The build material spreading apparatus of claim 1, wherein the camera is to visualize an area of the layer which is distant from the build area.

4. The build material spreading apparatus of claim 1, wherein the camera is to visualize a side of the layer of build material.

5. The build material spreading apparatus of claim 4, wherein the side is adjacent to a position of the movable spreader at the end of the formation of the layer.

6. The build material spreading apparatus of claim 4, wherein the controller is configured to:

split up the side into at least two segments,

for each segment, measure a surface area of a part of the layer being adjacent to the segment;

determine a surface area delimited by the side by calculating the sum of the surface areas associated to the segments of the side.

7. The build material spreading apparatus of claim 1, further comprising a housing (38) including a platform chamber (44), a first supply chamber (46), and a second supply chamber (48), the second supply chamber being opposite to the first supply chamber with respect to the platform, the spreader being movable above the platform chamber and the first and second supply chambers.

8. The build material spreading apparatus of claim 7, wherein the camera is arranged to have a field of vision encompassing the upper surface of the platform chamber, the first supply chamber, and the second supply chamber.

9. The build material spreading apparatus of claim 7, wherein the platform chamber is downwardly delimited by a platform (54), the platform to vertically move with respect to the housing.

10. The build material spreading apparatus of claim 9, wherein the first supply chamber and the second supply chamber are downwardly delimited by respective pistons (58, 60), each of the pistons to vertically move with respect to the housing.

11. An additive manufacturing device (10) comprising a build material spreading apparatus according to any of the preceding claims.

12. The additive manufacturing device of claim 11, wherein the additive manufacturing device (10) includes a printing chamber (12) delimited by a printing structure (14), the device further comprising a heat source (18) located within the printing chamber (12) to heat the build material provided by the build material dispenser.

13. A build material spreading method, including:

spreading a first layer of build material over a build area,

taking an image of the first layer,

determining an excess amount of build material dispensed to form the first layer based on a portion of the image taken,

calculating an amount of build material needed to form a second layer as a function of the excess amount of build material dispensed to form the first layer,

piloting a build material dispenser to provide a movable spreader with the determined amount of build material, and

spreading a second layer of build material over the build area using the build material provided by the build material dispenser.

14. The build material spreading method of claim 13, wherein calculating the amount of build material needed to form the second layer includes applying the formula:

$$abm = A - eabm$$

wherein abm is the amount of build material needed to form the second layer, eabm is the excess amount of build material dispensed to form the first layer and A is a constant predetermined amount of build material.

**Patentansprüche**

1. Baumaterialverteilungseinrichtung (26, 36) für eine additive Fertigung, die einschließt

   eine bewegliche Verteileinheit (32, 66), um Baumaterial über einen Baubereich (28) zu verteilen,
   einen Baumaterialausgeber (30), um Baumaterial an die bewegliche Verteileinheit bereitzustellen,
   eine Kamera (76), um mindestens teilweise die Schicht von Baumaterial, die durch den Baumaterialausgeber bereitgestellt wird, zu visualisieren, und
   eine Steuerung (34, 78), die konfiguriert ist, um die Menge von Baumaterial, die benötigt wird, um eine Schicht auszubilden, die über den Baubereich zu verteilen ist, zu kalibrieren, wobei die Steuerung konfiguriert ist zum:

   Steuern der Baumaterialverteileinheit, um eine vorbestimmte Menge von Baumaterial auszugeben;
   Steuern der beweglichen Verteileinheit, um das ausgegebene Baumaterial zu verteilen, um eine Schicht von Baumaterial auf dem Baubereich auszubilden;
   Verwenden eines Bildes, das durch die Kamera aufgenommen wird, um eine Menge von Baumaterial zu bestimmen, die nach dem Verteilen verbleibt; und
   Modifizieren, auf der Basis der bestimmten Menge von verbleibendem Baumaterial, der vorbestimmten Menge von Baumaterial, die anschließend durch den Baumaterialausgeber bereitzustellen ist.

2. Baumaterialverteilungseinrichtung nach Anspruch 1, wobei die Steuerung konfiguriert ist zum:

   Verwenden des Bildes, das durch die Kamera aufgenommen wird, um einen Oberflächenbereich eines Abschnitts der Schicht zu messen;
   Berechnen eines Volumens durch ein Multiplizieren des Oberflächenbereichs, der durch eine vorbestimmte Höhe bestimmt wird;
   Ableiten der Menge von verbleibendem Baumaterial aus dem berechneten Volumen.

3. Baumaterialverteilungseinrichtung nach Anspruch 1, wobei die Kamera dazu dient, einen Bereich der Schicht zu visualisieren, der von dem Baubereich entfernt ist.

4. Baumaterialverteilungseinrichtung nach Anspruch 1, wobei die Kamera dazu dient, eine Seite der Schicht von Baumaterial zu visualisieren.

5. Baumaterialverteilungseinrichtung nach Anspruch 4, wobei die Seite an eine Position der beweglichen Verteileinheit an dem Ende der Ausbildung der Schicht angrenzt.

6. Baumaterialverteilungseinrichtung nach Anspruch 4, wobei die Steuerung konfiguriert ist zum:

   Aufteilen der Seite in mindestens zwei Segmente,
   für jedes Segment, Messen eines Oberflächenbereichs eines Teils der Schicht, die an das Segment angrenzt;
   Bestimmen eines Oberflächenbereichs, der durch die Seite abgegrenzt ist, durch das Berechnen der Summe der Oberflächenbereiche, die den Segmenten der Seite zugeordnet sind.

7. Baumaterialverteilungseinrichtung nach Anspruch 1, die ferner ein Gehäuse (38), das eine Plattformkammer (44), eine erste Versorgungskammer (46) und eine zweite Versorgungskammer (48) einschließt, umfasst, wobei die zweite Versorgungskammer der ersten Versorgungskammer in Bezug auf die Plattform gegenüberliegt, wobei die Verteileinheit über der Plattformkammer und die erste und die zweite Versorgungskammer beweglich ist.

8. Baumaterialverteilungseinrichtung nach Anspruch 7, wobei die Kamera dazu angeordnet ist, ein Sichtfeld aufzuweisen, das die obere Oberfläche der Plattformkammer, die erste Versorgungskammer und die zweite Vorratskammer umgibt.

9. Baumaterialverteilungseinrichtung nach Anspruch 7, wobei die Plattformkammer durch eine Plattform (54) nach unten abgegrenzt ist, wobei die Plattform dazu dient, sich in Bezug auf das Gehäuse vertikal zu bewegen.

10. Baumaterialverteilungseinrichtung nach Anspruch 9, wobei die erste Versorgungskammer und die zweite Versorgungskammer durch jeweilige Kolben (58, 60) nach unten abgegrenzt sind, wobei jeder der Kolben dazu dient, sich in Bezug auf das Gehäuse vertikal zu bewegen.

11. Additive Fertigungsvorrichtung (10), die eine Baumaterialverteilungseinrichtung nach einem der vorstehenden Ansprüche umfasst.

12. Additive Fertigungsvorrichtung nach Anspruch 11, wobei die additive Fertigungsvorrichtung (10) eine Druckkammer (12) einschließt, die durch eine Druckstruktur (14) abgegrenzt ist, wobei die Vorrichtung ferner eine Wärmequelle (18), die sich innerhalb der Druckkammer (12) befindet, umfasst, um das Baumaterial, das durch den Baumaterialausgeber bereitgestellt wird, zu erwärmen.

13. Baumaterialverteilungsverfahren, das einschließt:

Verteilen einer ersten Schicht von Baumaterial über einen Baubereich, wobei ein Bild der ersten Schicht aufgenommen wird,
Bestimmen einer überschüssigen Menge von ausgegebenem Baumaterial, um die erste Schicht auf der Basis von einem Abschnitt des aufgenommenen Bildes auszubilden,
Berechnen einer Menge von Baumaterial, die benötigt wird, um eine zweite Schicht in Abhängigkeit von der überschüssigen Menge von ausgegebenem Baumaterial auszubilden, um die erste Schicht auszubilden,
Führen eines Baumaterialausgebers, um die bestimmten Menge von Baumaterial an eine bewegliche Verteileinheit bereitzustellen, und
Verteilen einer zweiten Schicht von Baumaterial über dem Baubereich unter Verwendung des Baumaterials, das durch den Baumaterialausgeber bereitgestellt wird.

14. Baumaterialverteilungsverfahren nach Anspruch 13, wobei das Berechnen der Menge von Baumaterial, die benötigt wird, um die zweite Schicht auszubilden, ein Anwenden der folgenden Formel einschließt:

$$abm = A - eabm$$

wobei abm die Menge von Baumaterials ist, die benötigt wird, um die zweite Schicht auszubilden, eabm die überschüssige Menge von ausgegebenem Baumaterial ist, um die erste Schicht auszubilden, und A eine konstante vorbestimmte Menge von Baumaterial ist.

**Revendications**

1. Appareil d'étalement de matériau de construction (26, 36) pour la fabrication additive, comportant

un épandeur mobile (32, 66) pour étaler un matériau de construction sur une zone de construction (28),
un distributeur de matériau de construction (30) pour fournir un matériau de construction à l'épandeur mobile,
une caméra (76) pour visualiser au moins partiellement la couche de matériau de construction fournie par le distributeur de matériau de construction, et
un contrôleur (34, 78) configuré pour étalonner la quantité de matériau de construction nécessaire pour former une couche à étaler sur la zone de construction, dans lequel le contrôleur est configuré pour :

commander le distributeur de matériau de construction pour distribuer une quantité prédéterminée de matériau de construction ;
commander l'épandeur mobile pour étaler le matériau de construction distribué pour former une couche de matériau de construction sur la zone de construction ;
utiliser une image prise par la caméra pour déterminer une quantité de matériau de construction restant après l'étalement ; et
modifier, en fonction de la quantité déterminée de matériau de construction restant, la quantité prédéterminée de matériau de construction devant être ultérieurement fournie par le distributeur de matériau de construction.

2. Appareil d'étalement de matériau de construction selon la revendication 1, dans lequel le contrôleur est configuré pour :

utiliser l'image prise par la caméra pour mesurer une zone de surface d'une partie de la couche ;
calculer un volume en multipliant la zone de surface déterminée par une hauteur prédéterminée ;
déduire la quantité de matériau de construction restant du volume calculé.

3. Appareil d'étalement de matériau de construction selon la revendication 1, dans lequel la caméra doit visualiser une zone de la couche qui est éloignée de la zone de construction.

4. Appareil d'étalement de matériau de construction selon la revendication 1, dans lequel la caméra doit visualiser un côté de la couche de matériau de construction.

5. Appareil d'étalement de matériau de construction selon la revendication 4, dans lequel le côté est adjacent à une position de l'épandeur mobile à la fin de la formation de la couche.

6. Appareil d'étalement de matériau de construction selon la revendication 4, dans lequel le contrôleur est configuré pour :

diviser le côté en au moins deux segments,
pour chaque segment, mesurer une zone de surface d'une part de la couche adjacente au segment ;
déterminer une zone de surface délimitée par le côté en calculant la somme des zones de surface associées aux segments du côté.

7. Appareil d'étalement de matériau de construction selon la revendication 1, comprenant en outre un logement (38) comportant une chambre de plateforme (44), une première chambre d'alimentation (46) et une seconde chambre d'alimentation (48), la seconde chambre d'alimentation étant opposée à la première chambre d'alimentation par rapport à la plateforme, l'épandeur étant mobile au-dessus de la chambre de plateforme et des première et seconde chambres d'alimentation.

8. Appareil d'étalement de matériau de construction selon la revendication 7, dans lequel la caméra est agencée pour avoir un champ de vision englobant la surface supérieure de la chambre de plateforme, la première chambre d'alimentation, et la seconde chambre d'alimentation.

9. Appareil d'étalement de matériau de construction selon la revendication 7, dans lequel la chambre de plateforme est délimitée vers le bas par une plateforme (54), la plateforme devant se déplacer verticalement par rapport au logement.

10. Appareil d'étalement de matériau de construction selon la revendication 9, dans lequel la première chambre d'alimentation et la seconde chambre d'alimentation sont délimitées vers le bas par des pistons (58, 60) respectifs, chacun des pistons devant se déplacer verticalement par rapport au logement.

11. Dispositif de fabrication additive (10) comprenant un appareil d'étalement de matériau de construction selon l'une quelconque des revendications précédentes.

12. Dispositif de fabrication additive selon la revendication 11, dans lequel le dispositif de fabrication additive (10) comporte une chambre d'impression (12) délimitée par une structure d'impression (14), le dispositif comprenant en outre une source de chaleur (18) située à l'intérieur de la chambre d'impression (12) pour chauffer le matériau de construction fourni par le distributeur de matériau de construction.

13. Procédé d'étalement de matériau de construction, comportant :

l'étalement d'une première couche de matériau de construction sur une zone de construction, la prise d'une image de la première couche, la détermination d'une quantité excédentaire de matériau de construction distribué pour former la première couche en fonction d'une partie de l'image prise,

le calcul d'une quantité de matériau de construction nécessaire pour former une seconde couche en fonction de la quantité excédentaire de matériau de construction distribué pour former la première couche,
le pilotage d'un distributeur de matériau de construction pour fournir la quantité déterminée de matériau de construction à un épandeur mobile, et
l'étalement d'une seconde couche de matériau de construction au-dessus de la zone de construction à l'aide du matériau de construction fourni par le distributeur de matériau de construction.

14. Procédé d'étalement de matériau de construction selon la revendication 13, dans lequel le calcul de la quantité de matériau de construction nécessaire pour former la seconde couche comporte l'application de la formule :

$$abm = A - eabm$$

dans laquelle abm est la quantité de matériau de construction nécessaire pour former la seconde couche, eabm est la quantité excédentaire de matériau de construction distribué pour former la première couche et A est une quantité prédéterminée constante de matériau de construction.

## FIG.1

22

10

20

24
18
14

12

16

Z

X Y

26

## FIG.2

32
28

26

16

Z

X Y

30

34

## FIG.3

## FIG.4

## FIG.5

# FIG.6

```
┌─────────────────────────────┐
│   PROVIDE BUILD MATERIAL     │──── 80
└─────────────────────────────┘
              │
              ▼
┌─────────────────────────────┐
│        MOVE SPREADER         │──── 82
└─────────────────────────────┘
              │
              ▼
┌─────────────────────────────┐
│    TAKE IMAGE OF THE LAYER   │──── 84
└─────────────────────────────┘
              │
              ▼
┌─────────────────────────────┐
│   ANALYZE A SIDE DISPLAYED   │──── 86
│        ON THE IMAGE          │
└─────────────────────────────┘
              │
              ▼
┌─────────────────────────────┐
│    CALCULATE EXCESS AMOUNT   │──── 88
└─────────────────────────────┘
              │
              ▼
┌─────────────────────────────┐
│      HEAT BUILD MATERIAL     │──── 106
└─────────────────────────────┘
              │
              ▼
┌─────────────────────────────┐
│       LOWER PLATFORM         │──── 108
└─────────────────────────────┘
              │
              ▼
┌─────────────────────────────┐
│  CALCULATE AMOUNT NEEDED     │──── 110
│    TO FORM THE NEXT LAYER    │
└─────────────────────────────┘
```

# FIG.7

# FIG.8

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015150804 A
- US 2004265413 A1
- JP 2008068439 A